# EUROPÄISCHE PATENTSCHRIFT

(11) **EP 2 631 628 B1**
(45) Veröffentlichungstag und Bekanntmachung des Hinweises auf die Patenterteilung: **26.06.2019**
(21) Anmeldenummer: 12156443.9
(22) Anmeldetag: 22.02.2012
(51) Int. Cl.: G01N 1/22

(54) **Verfahren und Vorrichtung zum Messen, insbesondere von Lachgas oder Ammoniak in den Abgasen von Verbrennungsmotoren**
Method and device for measuring, in particular laughing gas or ammoniac in the exhaust gases of combustion engines
Procédé et dispositif de mesure, notamment de gaz hilarant ou d'ammoniaque dans des gaz d'échappement de moteurs à combustion interne

(43) Veröffentlichungstag der Anmeldung: 28.08.2013
(73) Patentinhaber: CGS Prozessanalytic GmbH, 85095 Denkendorf (DE)
(72) Erfinder: Geyer, Christian, 85095 Denkendorf (DE)
(74) Vertreter: Oberhardt, Knut

(56) Entgegenhaltungen:
- EP-A1- 0 503 996
- EP-A2- 1 677 107
- EP-A2- 2 172 762
- WO-A1-97/12221
- WO-A1-02/071030
- US-A- 5 637 809

## Beschreibung

Die Erfindung betrifft ein Verfahren zum Messen, insbesondere von Lachgas oder Ammoniak in den Abgasen von Verbrennungsmotoren nach dem Oberbegriff von Anspruch 1, sowie eine Vorrichtung zur Durchführung des Verfahrens nach Anspruch 6.

Distickstoffmonoxid (N₂O), auch als Lachgas bekannt, trägt durch sein Absorptionsspektrum dazu bei, ein sonst zum Weltall hin offenes Strahlungsfenster zu schließen. Mit einer mittleren atmosphärischen Verweilzeit von 114 Jahren und einem relativ hohen molekularen Treibhauspotenzial von 298 wird es heute als klimarelevantes Gas eingestuft. Sein Beitrag zum anthropogenen Treibhauseffekt beträgt etwa 5 %.

Neuere Untersuchungen haben gezeigt, dass Maßnahmen zur Senkung der Stickoxidemissionen aus Verbrennungsprozessen zu einer zum Teil erheblichen Zunahme der Lachgasemissionen führen. Dies gilt auch für Kraftfahrzeuge mit geregeltem Dreiwegekatalysator. Da der Anteil der Katalysatorfahrzeuge weltweit weiterhin ansteigt, kann in den nächsten Jahren beim Einsatz der heutigen Dreiwegekatalysatoren mit einem deutlichen Anstieg der Kfz-bedingten Lachgas-Emissionen gerechnet werden.

Der Lachgas-Anteil in den Abgasen von Kraftfahrzeugen soll deshalb gesetzlich beschränkt werden. Es ist aber bis heute kein Verfahren bekannt geworden, mit dem der Lachgasanteil im Abgasstrom kontinuierlich und reproduzierbar nachgewiesen werden kann.

Ammoniak (NH₃) liefert zwar keinen Beitrag zum Treibhauseffekt und zur Zerstörung der Ozonschicht, wirkt aber toxisch. Ammoniak ist ebenfalls in den Emissionen von Verbrennungsprozessen, also auch in den Abgasen von Verbrennungsmotoren vorhanden. Die Ammoniak-Konzentration im Abgas soll deshalb ebenfalls gesetzlich eingeschränkt werden. Aber auch hier existiert bisher kein Verfahren, um den Ammoniakanteil im Abgasstrom kontinuierlich und reproduzierbar nachzuweisen.

Die EP 2 172 762 A2 zeigt eine Mischstelle für die Mischung eines Abgases mit einem Verdünnungsgas. Die Mischstelle ist als Venturi-Düse ausgebildet. Das Abgas wird Düse über das zentrale Probegasrohr zugeführt, während das Verdünnungsgas über ein koaxiales Außenrohr zugeführt wird.

In der WO 97/12221 A1 ist eine Vorrichtung zum Verdünnen eines Abgasstroms beschrieben. Dabei wird über eine Pumpe im Strang des bereits verdünnten Abgases ein Unterdruck erzeugt, der in der Mischstation gleichermaßen an der Zuführung des Verdünnungsgases als auch der Zuführung des Abgases anliegt. Um ein konstantes Mischungsverhältnis erreichen zu können, wird der Druck des Verdünnungsgases an den Druck des Abgases angepasst. Dazu ist eine Regelung vorgesehen, die über den Abgasdruck in der Leitung für das Abgas ein Regelventil in der Leitung für das Verdünnungsgas so einstellt, dass in beiden Leitungen der gleiche Druck vorherrscht.

Die US 5 637 809 A zeigt eine Messvorrichtung für Abgase mit einer Venturi-Düse zum Mischen von Abgas und Luft. Im Abgasstrom vor der Venturi-Düse ist eine Drossel vorgesehen. Vor der Drossel ist noch ein Feinfilter eingebaut.

Der Erfindung liegt die Aufgabe zugrunde, ein Verfahren und eine Vorrichtung zum Messen, insbesondere von Lachgas oder Ammoniak in den Abgasen von Verbrennungsmotoren zu schaffen. Die Messungen sollen in kurzen Zeitabständen durchführbar sein, so dass eine Messreihe unter verschiedenen Lastzuständen durchgeführt werden kann.

Gelöst wird die Aufgabe gemäß der Erfindung durch ein Verfahren und eine Vorrichtung mit den Merkmalen von Anspruch 1, bzw. Anspruch 6. Dadurch, dass ein Abgasstrom auf einer Temperatur von über 100° C gehalten wird, kann verhindert werden, dass Wasser aus diesem Abgasstrom auskondensiert. Der Abgasstrom enthält normalerweise einen Wasseranteil von ca. 20 vol%. Da sowohl Ammoniak als auch Lachgas gut wasserlöslich sind, würde die Messung folglich stark verfälscht werden, wenn Wasser vor der Messung aus dem Abgasstrom ausfällt.

Es besteht jedoch das Problem, dass eine Messeinheit, die die Fähigkeit besitzt, Lachgas oder Ammoniak im ppm-Bereich detektieren zu können, nur in einem Temperaturbereich zwischen etwa 10 und 35° C reproduzierbare Ergebnisse liefert. Der Abgasstrom wird deshalb so stark verdünnt, dass die etwa 20 vol% Wassergehalt auf einen Wert reduziert werden, der auch bei Zimmertemperatur nicht auskondensiert. Unter normalen Bedingungen nimmt 1 m³ Luft bei einer Temperatur von 18° C maximal 15,4 g Wasserdampf auf. Ein Wassergehalt von 20 vol% in dem Abgas bedeutet, dass in 1 m³ des zu messenden Abgases etwa 130 g Wasserdampf enthalten sind. In diesem Fall sollte das Abgas mit wenigstens dem 7,5-fachen Volumen eines trockenen Gases oder Gasgemisches, welches die zu messenden Bestandteile nicht enthält, verdünnt werden.

Liegt die Temperatur des der Messeinheit zugeführten Messgasstroms höher als 18° C, reicht entsprechend weniger Verdünnungsgas aus, um ein Auskondensieren von Wasser sicher zu verhindern. So ist z. B. bei einer Temperatur von 27° C eine Verdünnung auf das sechsfache Volumen, also eine Mischung mit dem fünffachen Volumen an Verdünnungsgas angeraten. Der Abgasstrom soll deshalb erfindungsgemäß mit wenigstens dem fünffachen Volumen des Verdünnungsgases gemischt werden. Um ein reproduzierbares Messergebnis der Messeinheit garantieren zu können, sollte die Temperatur des der Messeinheit zugeführten Messgasstroms aber nicht zu hoch gewählt werden.

Zur Verdünnung des Abgasstroms können Gase oder Gasgemische verwendet werden, die zum einen kein Wasser und zum anderen nicht die zu messenden Bestandteile, also in diesem Fall weder Lachgas noch Ammoniak enthalten. Die sicherlich einfachste und auch preisgünstigste Möglichkeit ist es, ein Gasgemisch zu verwenden, das überall in ausreichender Menge vorhanden ist. Es wird deshalb besonders vorteilhaft, als Gas oder Gasgemisch ohne die zu messenden Bestandteile, trockene und gereinigte Instrumentenluft verwendet.

Bei Kraftfahrzeugen müssen die Abgase in verschiedenen Zuständen, z. B. mit unterschiedlicher Last geprüft werden. Es ist also notwendig nicht nur eine Messung, sondern eine ganze Messreihe mit zeitlich gering beabstandeten Messpunkten durchzuführen, die die Abgaswerte bei unterschiedlichen Zuständen repräsentieren. Es werden deshalb in der Messeinheit Messungen wenigstens im Sekunden-Takt durchgeführt.

Um reproduzierbare Messwerte zu erhalten, werden die Messungen mit einer Temperatur des Messgasstroms durchgeführt, die im Bereich der normalen Raumtemperatur liegt. Für diesen Temperaturbereich wird der Abgasstrom erfindungsgemäß mit dem zehn- bis zwölffachen Volumen an Luft zu einem Mischgasstrom vermischt, damit sichergestellt werden kann, dass das ursprünglich in dem Abgasstrom enthaltene Wasser nicht auskondensiert. Dadurch ist gewährleistet, dass die Messwerte der gut wasserlöslichen zu messenden Bestandteile (insbesondere Lachgas oder Ammoniak) nicht verfälscht werden. Bei der Verwendung des zehn- bis zwölffachen Volumens von Luft wird auch verhindert, dass ein Wasseranteil im Abgas, der die 20 vol% überschreitet, ausfällt. Ebenso kann auf diese Weise verhindert werden, dass sich eine möglicherweise in dem Verdünnungsgas vorhandene Restfeuchte negativ auf die Messgenauigkeit auswirkt.

Um zu verhindern, dass das enthaltene Wasser nicht bereits vor der Vermischung mit Luft ausfällt, wird der Abgasstrom vorteilhaft auf einer Temperatur von 120 bis 190° C gehalten. In diesem Temperaturbereich ist davon auszugehen, dass auch alle Kontaktflächen auf einer Temperatur gehalten werden, die ein Auskondensieren von Wasser unwahrscheinlich erscheinen lässt. Es ist aber nicht maßgeblich, ob die Kontaktflächen von den Abgasen, oder die Abgase von den Kontaktflächen auf Temperatur gehalten werden.

Besonders vorteilhaft ist eine Abgasaufbereitung vorgesehen, die eine Venturi-Düse zum Mischen von Abgas und Luft aufweist, wobei der Abgasstrom am Unterdruckanschluss und komprimierte Luft am Druckanschluss der Venturi Düse anliegen. Die Abgasaufbereitung kann dabei als eigenes Modul ausgebildet sein, dass dann nur zwischen den Abgasstrom und die Messeinheit geschaltet wird. Das Modul kann ebenfalls beheizt werden, so dass die Innentemperatur der Abgasaufbereitung ebenfalls auf einer Temperatur zwischen 120 und 190° C gehalten wird.

Die Verwendung einer Venturi-Düse hat den Vorteil, dass eine innige Vermischung des Abgases mit der Luft auf sehr einfache Weise realisiert werden kann. Die Venturi-Düse wirkt an ihrem Unterdruckanschluss als Pumpe, so dass keine weiteren Maßnahmen getroffen werden müssen um das Abgas der Venturi-Düse zuzuführen.

Es muss jedoch dafür gesorgt werden, dass bei konstantem an dem Druckanschluss der Venturi-Düse anliegenden Luftdruck auch eine konstante Menge an Abgas von der Venturi-Düse zugemischt wird. Zu diesem Zweck ist in dem Abgasstrom vor der Venturi-Düse eine Drossel vorgesehen.

Wie im vorherigen Absatz bereits erwähnt darf sich der Luftdruck, der an dem Druckanschluss der Venturi-Düse anliegt, während der Messung nicht verändern. Es ist deshalb eine erste Druckregelanordnung vorgesehen ist, die den Druck der Luft am Druckanschluss der Venturi-Düse konstant hält.

Bei der Vermessung des Abgases eines Verbrennungsmotors in verschiedenen Zuständen, kann es auch zu sehr unterschiedlichen Drücken im Abgasstrom kommen. Da aber die der Venturi-Düse zugeführte Menge trotzdem über die ganze Messung konstant bleiben muss, ist eine zweite Druckregelanordnung vorgesehen, die den Druck des Abgases vor der Drossel begrenzt. Wenn der Druck einen festgelegten Schwellwert überschreitet, öffnet die zweite Druckregelanordnung und erlaubt damit dem Abgas aus diesem Bereich abzuströmen und den Druck vor der Drossel auf diese festgelegte Obergrenze zu begrenzen.

Da die zweite Druckregelanordnung mit Abgas beaufschlagt ist, muss sichergestellt werden, dass sie durch Verschmutzung nicht funktionsuntüchtig wird. Es ist deshalb der zweiten Druckregelanordnung ein Filter vorgeschaltet.

Vorteilhaft ist vor der Abgasaufbereitung eine Heizung für den Abgasstrom vorgesehen. Dadurch kann sichergestellt werden, dass der Abgasstrom nicht auf eine Temperatur abkühlt, bei der Wasser auskondensieren kann. Vorteilhaft wird aber auch die gesamte Abgasaufbereitung beheizt. Damit ist sichergestellt, dass sich das Abgas auf keinen Fall abkühlen kann, bevor es entsprechend verdünnt wird. Dass der verdünnte Mischgasstrom, der durch die Entspannung der Luft in der Venturi-Düse zwar eine Abkühlung erfährt, sich aber bei seinem weiteren Weg durch das Modul wieder aufheizt und dann bei Austritt aus der Abgasaufbereitung eine Temperatur oberhalb der Raumtemperatur aufweist, spielt keine Rolle, da sich der Mischgasstrom auf seinem Weg von dem Modul zur Messeinheit - bereits nach kurzer Strecke - an die Raumtemperatur angeglichen hat.

Um die Messanordnung kalibrieren und validieren zu können muss eine Beschickung mit verschiedenen Prüfgasen möglich sein. Erfindungsgemäß sind zu diesem Zweck ein erstes und ein zweites Absperrventil parallel angeordnet, wobei das erste Absperrventil den Zugang für das Abgas und das zweite Absperrventil den Zugang für das Prüfgas zu der Abgasaufbereitung bilden. Bei den Absperrventilen handelt es sich besonders vorteilhaft um Ventile mit einem Stellglied, die alternierend geöffnet oder geschlossen sind. So kann die Messanordnung entweder für die Kalibrierung oder für den Messvorgang vorbereitet werden.

Um reproduzierbare Messwerte erreichen zu können, muss die Messeinheit konstant mit dem gleichen Volumenstrom an Messgas versorgt werden. Es ist deshalb eine Pumpe vorgesehen, die einen konstanten Messgasstrom aus dem Mischgasstrom entnimmt und durch die Messeinheit fördert. Die Pumpe kann vorteilhaft innerhalb der Messeinheit vorgesehen sein, so dass auch die Messeinheit ein eigenständiges Modul bildet, welches lediglich mit der Abgasaufbereitung verbunden werden muss.

Sowohl Lachgas als auch Ammoniak kommen in Abgasen nur in sehr kleinen Konzentrationen vor. Um zu verhindern, dass vor der Messung Wasser auskondensiert und die Messung dadurch verfälscht wird, muss das Abgas verdünnt werden. Dadurch wird die Konzentration der zu messenden Bestandteile aber nochmals herabgesetzt. Solche geringen Konzentrationen lassen sich nur sehr schwer nachweisen. Die Messeinheit weist daher erfindungsgemäß ein photoakustisches Spektrometer mit einem Quantenkaskadenlaser auf. Da der photoakustische Effekt bei jeder Verbindung nur bei einer ganz bestimmten Wellenlänge auftritt, müssen für Lachgas und für Ammoniak unterschiedliche Laser verwendet werden.

Es muss nicht nur verhindert werden, dass die zu messenden Schadstoffe vor der Messung zusammen mit Wasser auskondensieren, sondern auch, dass sie an den Innenwänden der Messanordnung anhaften und so für die eigentliche Messung in der Messeinheit nicht mehr Bestandteil des Messgasstroms sind. Abgas führende Teile der Vorrichtung sind deshalb vorteilhaft mit einer Beschichtung gegen Adsorption versehen.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: ein Flussschema der erfindungsgemäßen Messanordnung mit Abgasaufbereitung und Messeinheit und
- Fig. 2: eine schematische Darstellung der Abgasaufbereitung aus Fig. 1

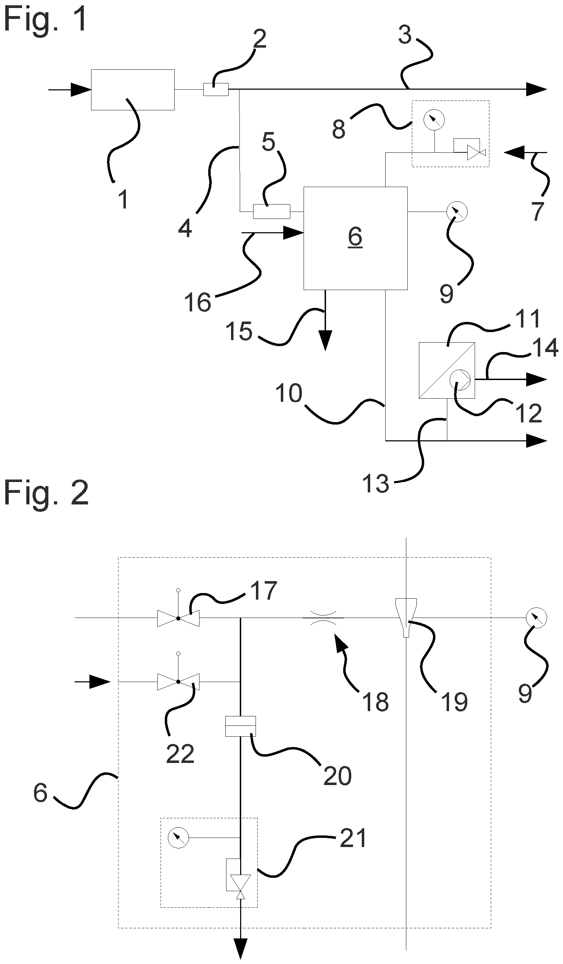

Die in Fig. 1 dargestellte Messanordnung zeigt den Verbrennungsmotor 1 dessen Abgase überprüft werden sollen. Hinter dem Verbrennungsmotor ist noch ein Katalysator 2 vorgesehen. In dem gezeigten Ausführungsbeispiel wird die Abgasprobe hinter dem Katalysator 2 entnommen. Dies geschieht üblicherweise mit einem Staurohr, welches in dem Abgasstrom 3 platziert wird.

Bei einem anderen, hier nicht gezeigten Ausführungsbeispiel der Erfindung wird die Abgasprobe direkt hinter dem Auslassventil des Verbrennungsmotors 1 entnommen. Hier müssen die, gegenüber dem ersten Ausführungsbeispiel unterschiedlichen Druckverhältnisse berücksichtigt werden.

Über die Entnahmeleitung 4 wird das Abgas über die Heizung 5 der Abgasaufbereitung 6 zugeführt. Da die zu messenden Gase wasserlöslich sind, darf kein Wasser auskondensieren. Das Abgas wird deshalb in unverdünntem Zustand auf einer Temperatur von 120 bis 190° C gehalten. Damit auch innerhalb der Abgasaufbereitung 6 keine Kondensation von Wasserdampf erfolgt, wird vorteilhaft die gesamte Abgasaufbereitung 6 auf dieser Temperatur gehalten. Zu diesem Zweck kann die Abgasaufbereitung 6 aus einem metallischen Vollblock bestehen, der auf der angestrebten Temperatur gehalten wird. Es hat sich herausgestellt, dass in den meisten Fällen reproduzierbare Ergebnisse erzeugt werden können, wenn die Abgastemperatur auf 120° C gehalten wird.

Um das Abgas soweit verdünnen zu können, dass auch bei Raumtemperatur kein Wasser auskondensiert, wird der Abgasaufbereitung 6 trockene und gereinigte Instrumentenluft, im Folgenden als Reinluft 7 bezeichnet, zur Verfügung gestellt. Die Reinluft kann vor Ort aus Umgebungsluft erzeugt werden, die mit einem Kompressor verdichtet und über einen Wasserabscheider, einen Ölabscheider, einen Aktivkohlefilter und einen Katalysator zur Entfernung von Lachgas geleitet wird. Es kann aber auch zugekaufte Reinluft aus Flaschen oder größeren Druckbehältern verwendet werden.

Die Reinluft 7 ist über eine erste Druckregeleinrichtung 8 an die Abgasaufbereitung 6 angeschlossen. Diese Druckregeleinrichtung 8 soll die Abgasaufbereitung 6 mit einem konstanten Druck versorgen, der so eingestellt wird, dass das Abgas in der Abgasaufbereitung 6 mit dem zehn- bis zwölffachem Volumen an Reinluft 7 gemischt wird. Das mit der Reinluft vermischte Abgas verlässt die Abgasaufbereitung 6 als Mischgasstrom 10.

Der Mischgasstrom 10 strömt durch eine nicht isolierte Leitung, so dass sich seine Temperatur schnell an die vorherrschende Raumtemperatur anpassen kann. Aus dem Mischgasstrom 10 wird der Messgasstrom 13 entnommen. Hierfür ist die Pumpe 12 der Messeinheit 11 zuständig. Die Messeinheit mit dem Gehäuse, der Pumpe 12 und dem photoakustisches Spektrometer wird hier als Analysator 11 bezeichnet. Die Pumpe 12 sorgt dafür, dass der Analysator 11 kontinuierlich mit einem konstanten Volumen an Messgas durchströmt wird. Die bei dem gezeigten Ausführungsbeispiel eingesetzte Dosierpumpe fördert einen konstanten Volumenstrom von 2,4 I pro Stunde.

Der Analysator 11 weist ein photoakustisches Spektrometer mit einem Quantenkaskadenlaser auf. Bei der photoakustischen Spektroskopie macht man sich zunutze, dass Moleküle eines bestimmten Gases auch nur Licht einer ganz bestimmter Wellenlänge absorbieren können. Zum Nachweis dieser Moleküle in einem Gasgemisch werden Lichtpulse eines Lasers verwendet, dessen Frequenz nur von dieser Sorte Moleküle absorbiert werden kann. Der resultierende ständige Wechsel zwischen Erhitzung und Abkühlung führt zu abwechselnder Ausdehnung und Kontraktion. Dieses Verhalten der Gasmoleküle verursacht Schallwellen die mit einem geeigneten Mikrofon gemessen werden können. Der gemessene Schall ist umso lauter, je höher der Anteil des zu messenden Bestandteils an dem Gasgemisch ist. Mit dieser Messmethode ist eine sehr genaue quantitative Bestimmung sehr geringer Konzentrationen eines Bestandteils in einem Gasgemisch möglich.

Der Quantenkaskadenlaser lässt sich mit relativ kleinen Abmessungen herstellen, so dass er sich hervorragend für den Einsatz in dem Analysator eignet. Mit Quantenkaskadenlasern lassen sich Wellenlängen etwa zwischen 3,5 und 141 µm erzeugen. In diesem Bereich liegen auch die Wellenlängen des Lichts, mit dem sich die Gasmoleküle von Lachgas und von Ammoniak anregen lassen. Für den Nachweis von Lachgas und Ammoniak müssen aber Laser mit unterschiedlicher Wellenlänge verwendet werden. So wird in dem gezeigten Ausführungsbeispiel für den Nachweis von Lachgas ein Quantenkaskadenlaser mit einer Wellenlänge von 7,8 µm und für den Nachweis von Ammoniak ein Quantenkaskadenlaser mit einer Wellenlänge von 10,3 µm verwendet. Es bietet sich deshalb an für den Nachweis von Lachgas und Ammoniak zwei separate Analysatoren zu verwenden.

Diese Analysatoren können jedoch den benötigten Messgasstrom aus dem selben Mischgasstrom 10 der Abgasaufbereitung 6 entnehmen so dass für beide Messungen nur eine Abgasaufbereitung benötigt wird. In diesem Fall würden zwei parallele Messgasströme 13 von dem Mischgasstrom 10 abzweigen und zu zwei unterschiedlichen Analysatoren führen.

Da der Messgasstrom 13 in dem Analysator nicht verändert wird, könnten die beiden Analysatoren sogar hintereinander geschaltet werden, so dass der Eingang des zweiten Analysators mit dem Messgas-Abstrom 14 des ersten Analysators verbunden ist. Bei dieser Ausführungsform könnte u. U. die Pumpe im ersten Analysator eingespart werden. Allerdings muss aufgrund der längeren Durchlaufzeit ein trägeres Verhalten und eine verlängerte Messzeit in Kauf genommen werden.

Um zu verhindern, dass sich die nachzuweisenden Bestandteile in der Messanordnung anlagern und so zu einer Verfälschung des Messergebnisses führen, sind alle gasführenden Teile des gezeigten Ausführungsbeispiels mit einer Beschichtung versehen, die die Adsorbtion von Stoffen stark vermindert.

In Fig. 2 ist detailliert der Aufbau der Abgasreinigung 6 gezeigt. Im oberen Bereich sind zwei Absperrventile angeordnet, von denen das obere Absperrventil 17 für den Zustrom des Abgases und das untere Absperrventil 22 für den Zustrom von Prüfgas zuständig ist. Bei beiden Absperrventilen handelt es sich um Ventile mit Stellgliedern, die über eine hier nicht gezeigte Steuerung angesteuert werden. Die Absperrventile 17 und 22 sind nur wechselweise geöffnet.

In Strömungsrichtung hinter den Absperrventilen 17 und 22 sind die Strömungskanäle für das Abgas von dem Absperrventil 17 und für das Prüfgas von dem Absperrventil 22 zusammengeführt. Hinter dieser Zusammenführung ist eine Drossel 18 angeordnet.

Die Drossel 18 sitzt vor der Venturi-Düse 19, deren Unterdruckanschluss mit der Drossel 18 verbunden ist. Der Druckanschluss der Venturi-Düse 19 wird über die erste Druckregelanordnung 8 mit komprimierter Reinluft 7 versorgt.

Mit den beiden Absperrventilen 17 und 22 steht eine zweite Druckregelanordnung 21 für das Abgas und das Prüfgas in Verbindung. Vor dieser zweiten Druckregelanordnung 21 ist ein Filter 20 vorgesehen, der verhindert, dass die Druckregelanordnung 21 durch das Abgas verschmutzt und dadurch funktionsuntüchtig wird.

Zur Kalibrierung der Messanordnung wird das Absperrventil 22 für das Prüfgas geöffnet, durch das nun sogenanntes Nullgas in die Abgasaufbereitung strömt. Dieses Nullgas besteht aus normaler Instrumentenluft, die die nachzuweisenden Bestandteile nicht enthält. Die erste Druckregelanordnung 8 wird nun so eingestellt, dass der Druck der an dem Druckanschluss der Venturi Düse 19 anstehenden Reinluft 7 etwa 3,5 bar beträgt.

Die Venturi-Düse 19 ist so dimensioniert, dass die Düse bei dem anstehenden Druck von 3,5 bar von ca. 550 l Reinluft pro Stunde durchströmt wird. An dem Unterdruckanschluss der Venturi-Düse 19 liegt dann ein Unterdruck von etwa -5,5 bar an. Dieser Unterdruck kann über das Manometer 9 kontrolliert werden. Bei einem Unterdruck von 5,5 bar werden etwa 55 I Prüfgas pro Stunde angesaugt. Der resultierende Mischgasstrom besteht dann aus insgesamt 605 I Reinluft plus Prüfgas pro Stunde. In diesem Zustand wird die Anzeige des Analysators 11 auf Null kalibriert.

Gleiche Kalibrierschritte werden nun mit unterschiedlichen Prüfgasen mit bekannter Konzentration des zu messenden Gases durchgeführt. Die unterschiedlichen Prüfgase können aus Instrumentenluft und einem zertifizierten Prüfgas bekannter Konzentration über hoch präzise Gas-Flow-Controller in einer Gasmischstation erzeugt werden. Es können aber auch bereit vorgemischte zertifizierte Prüfgase unterschiedlicher Konzentrationen verwendet werden.

Nach der Kalibrierung ist die Messanordnung bereit für die durchzuführenden Messungen. Hierzu wird das Absperrventil 22 geschlossen und das Absperrventil 17 geöffnet. Die Messanordnung ist nun direkt mit dem Abgasstrom 3 verbunden.

Wird das Abgas hinter dem Katalysator aus dem Abgasstrom 3 entnommen, wird der vor der Drossel 18 auftretende Druck im Normalfall einen vorbestimmten Grenzwert nicht überschreiten. Die Druckregelanordnung 22 für das Abgas wird in diesem Fall nicht öffnen und es wird kein Abgas über den Abgas-Abstrom 15 die Abgasaufbereitung 6 verlassen. Innerhalb dieses zugelassenen Druckbereichs sorgt die Drossel 18 dafür, dass der Venturi-Düse 19 immer ein konstanter Volumenstrom an Abgas zugeführt wird. Kleinere Druckänderungen wirken sich nicht aus.

Wird das Abgas aber direkt nach dem Auslassventil entnommen, können Druckschwankungen mit relativ hohen Druckspitzen auftreten. In diesem Fall kann in der Abgasaufbereitung 6 der vorbestimmte Maximaldruck überschritten werden. Es öffnet sich dann die Druckregelanordnung 22 für das Abgas und der Überdruck kann über den Abgas-Abstrom 15 entweichen. Auf diese Weise ist gewährleistet, dass sich auch höhere Drücke im Abgas vor der Drossel 18 nicht so auswirken, dass der Volumenstrom des der Venturi-Düse 19 zugeführten Abgases starken Änderungen unterworfen wird.

Die Messungen in dem Analysator 11 werden in einer zeitlichen Folge von weniger als einer Sekunde durchgeführt. Auf diese Weise können auch alle Veränderungen, die sich z. B. bei einem Lastwechsel des Verbrennungsmotors oder beim Wechsel aus dem Kaltstart in den Warmlauf ergeben, aufgezeichnet werden.

Da die Kalibrierung der Messanordnung relativ zeitaufwändig ist, wird sie normalerweise nur in vorbestimmten Intervallen vom Service durchgeführt. Eine Validierung sollte dagegen bei jeder Inbetriebnahme der Messanordnung durchgeführt werden.

Eine Validierung kann vom Betreiber der Messanordnung selbst durchgeführt werden. Hierfür wird nur ein Prüfgas einer bekannten Konzentration verwendet. Das Absperrventil 22 wird zu diesem Zweck geöffnet und es wird der Abgasaufbereitung 6 beispielsweise Prüfgas zugeführt, das aus Instrumentenluft mit einem Gehalt von 8 ppm Amoniak besteht. Die Anzeige des entsprechenden Analysators wird dann auf diesen Wert validiert. Ist an dem Messgasstrom 13 ein zweiter Analysator für den Nachweis von Lachgas angeschlossen, wird der selbe Validierungsschritt mit einem Prüfgas durchgeführt, das beispielsweise 8 ppm Lachgas enthält. Es ist darauf zu achten, dass das Prüfgas vor der Validierung der Anzeige jeweils lange genug durch die Messanordnung strömt, so dass sichergestellt ist, dass sich kein anderes Gas mehr in den Gas führenden Teilen befindet.

Selbstverständlich kann die Messanordnung nicht nur für die Messung von Lachgas und Ammoniak in den Abgasen von Verbrennungsmotoren verwendet werden. Es ist ebenso der Einsatz für die Messung anderer Bestandteile möglich, die in sehr geringen Konzentrationen in einem Gasgemisch nachgewiesen werden sollen.

Zu diesem Zweck muss aber immer ein Laser verwendet werden, dessen Wellenlänge an die nachzuweisenden Moleküle angeglichen ist.

### Bezugszeichenliste:

- 1: Verbrennungsmotor
- 2: Katalysator
- 3: Abgasstrom
- 4: Entnahmeleitung
- 5: Heizung
- 6: Abgasaufbereitung
- 7: Reinluft
- 8: Druckregelanordnung für Reinluft
- 9: Manometer
- 10: Mischgasstrom
- 11: Analysator
- 12: Pumpe
- 13: Messgasstrom
- 14: Messgas-Abstrom
- 15: Abgas-Abstrom
- 16: Prüfgas
- 17: 1. Absperrventil für Abgas
- 18: Drossel
- 19: Venturi-Düse
- 20: Filter
- 21: Druckregelanordnung für Abgas
- 22: 2. Absperrventil für Prüfgas

## Patentansprüche

1. Verfahren zum Messen, insbesondere von Lachgas oder Ammoniak in den Abgasen von Verbrennungsmotoren (1), wobei ein Abgasstrom auf einer Temperatur von über 100° C gehalten wird, der Druck in dem Abgasstrom über eine Regelung konstant gehalten wird, der Abgasstrom mit wenigstens dem fünffachen Volumen eines Gases oder Gasgemisches (7) ohne die zu messenden Bestandteile in konstantem Verhältnis gemischt wird und ein derart verdünnter Messgasstrom (13) mit einer Temperatur zwischen 10 und 35° C einer Messeinheit (11) zugeführt wird.

2. Verfahren nach Anspruch 1, **dadurch gekennzeichnet, dass** als Gas oder Gasgemisch ohne die zu messenden Bestandteile trockene und gereinigte Instrumentenluft (7) verwendet wird.

3. Verfahren nach Anspruch 2, **dadurch gekennzeichnet, dass** in der Messeinheit (11) Messungen wenigstens im Sekunden-Takt durchgeführt werden.

4. Verfahren nach Anspruch 3, **dadurch gekennzeichnet, dass** der Abgasstrom mit dem zehn- bis zwölffachen Volumen an Luft zu einem Mischgasstrom (10) vermischt wird.

5. Verfahren nach Anspruch 4, **dadurch gekennzeichnet, dass** der Abgasstrom auf einer Temperatur von 120 bis 190° C gehalten wird.

6. Vorrichtung zur Durchführung des Verfahrens nach einem der Ansprüche 1 bis 5, wobei eine erste Druckregelanordnung (8) vorgesehen ist und dass eine Abgasaufbereitung (6) vorgesehen ist mit einer Venturi-Düse (19) zum Mischen von Abgas (3) und Luft (7), wobei der Abgasstrom am Unterdruckanschluss und komprimierte Luft am Druckanschluss der Venturi-Düse (19) anliegen, mit einer Drossel (18) in dem Abgasstrom vor der Venturi-Düse (19) und mit einer zweiten Druckregelanordnung (21), die den Druck des Abgases vor der Drossel (18) begrenzt, wobei die erste Druckregeleinrichtung (8) den Druck der Luft (7) am Druckanschluss der Venturi-Düse (19) konstant hält.

7. Vorrichtung nach Anspruch 6, **dadurch gekennzeichnet, dass** der zweiten Druckregelanordnung (21) ein Filter (20) vorgeschaltet ist.

8. Vorrichtung nach Anspruch 7, **dadurch gekennzeichnet, dass** vor der Abgasaufbereitung (6) eine Heizung (5) für den Abgasstrom vorgesehen ist.

9. Vorrichtung nach Anspruch 8, **dadurch gekennzeichnet, dass** ein erstes (17) und ein zweites Absperrventil (22) parallel angeordnet sind, wobei das erste Absperrventil (17) den Zugang für das Abgas und das zweite Absperrventil (21) den Zugang für ein Prüfgas (16) zu der Abgasaufbereitung (6) bilden.

10. Vorrichtung nach Anspruch 9, **dadurch gekennzeichnet, dass** eine Pumpe (12) vorgesehen ist, die einen konstanten Messgasstrom (13) aus dem Mischgasstrom (10) entnimmt und durch die Messeinheit (11) fördert.

11. Vorrichtung nach Anspruch 10, **dadurch gekennzeichnet, dass** die Messeinheit (11) ein photoakustisches Spektrometer mit einem Quantenkaskadenlaser aufweist.

12. Vorrichtung nach Anspruch 11, **dadurch gekennzeichnet, dass** Abgas führende Teile der Vorrichtung mit einer Beschichtung gegen Adsorption versehen sind.

## Claims

1. A method for measuring nitrous oxide or ammonia in particular in the exhaust gases from internal combustion engines (1), wherein a stream of exhaust gas is maintained at a temperature of more than 100°C, the pressure in the stream of exhaust gas is kept constant via a controlling means, the stream of exhaust gas is mixed with at least five times the volume of a gas or gas mixture (7) without the components to be measured in a constant ratio and a stream of measuring gas (13) diluted in this manner is supplied to a measuring unit (11) at a temperature of between 10°C and 35°C.

2. The method as claimed in claim 1, **characterized in that** dry and purified instrument air (7) is used as the gas or gas mixture without the components to be measured.

3. The method as claimed in claim 2, **characterized in that** measurements are carried out in the measuring unit (11) at least once per second.

4. The method as claimed in claim 3, **characterized in that** the stream of exhaust gas is mixed with ten to twelve times the volume of air to form a stream of mixed gas (10).

5. The method as claimed in claim 4, **characterized in that** the stream of exhaust gas is maintained at a temperature of 120°C to 190°C.

6. A device for carrying out the method as claimed in one of claims 1 to 5, wherein a first pressure control means (8) is provided, and in that an exhaust gas treatment (6) is provided having a venturi nozzle (19) for mixing exhaust gas (3) and air (7), wherein the stream of exhaust gas is fitted to the vacuum connector and compressed air is fitted to the pressurized air inlet of the venturi nozzle (19), with a throttle (18) in the stream of exhaust gas upstream of the venturi nozzle (19) and with a second pressure control means (21) which limits the pressure of the exhaust gas upstream of the throttle (18),
wherein the first pressure control apparatus (8) keeps the pressure of the air (7) at the pressurized air inlet of the venturi nozzle (19) constant.

7. The device as claimed in claim 6, **characterized in that** a filter (20) is connected upstream of the second pressure control means (21).

8. The device as claimed in claim 7, **characterized in that** heating (5) for the stream of exhaust gas is provided upstream of the exhaust gas treatment (6).

9. The device as claimed in claim 8, **characterized in that** a first (17) and a second shut-off valve (22) are disposed in parallel, wherein the first shut-off valve (17) forms the access for the exhaust gas and the second shut-off valve (21) forms the access for a test gas (16) to the exhaust gas treatment (6).

10. The device as claimed in claim 9, **characterized in that** a pump (12) is provided which removes a constant stream of measuring gas (13) from the stream of mixed gas (10) and conveys it through the measuring unit (11).

11. The device as claimed in claim 10, **characterized in that** the measuring unit (11) comprises a photoacoustic spectrometer with a quantum cascade laser.

12. The device as claimed in claim 11, **characterized in that** exhaust gas-conveying parts of the device are provided with an anti-adsorption coating.

## Revendications

1. Procédé de mesure, plus particulièrement d'un gaz hilarant ou d'ammoniac dans les gaz d'échappement de moteurs à combustion (1), dans lequel un flux de gaz d'échappement est maintenu à une température de plus de 100° C, la pression dans le flux de gaz d'échappement est maintenue constante au moyen d'un réglage, le gaz d'échappement est mélangé à taux constant à au moins cinq fois le volume d'un gaz ou d'un mélange gazeux (7) sans les composants à mesurer et un flux de gaz de mesure ainsi dilué (13) avec une température située entre 10 et 35° C d'une unité de mesure (11) est introduit.

2. Procédé selon la revendication 1, **caractérisé en ce qu'**un air sec et propre pour instruments (7) est utilisé comme gaz ou mélange gazeux sans les composants à mesurer.

3. Procédé selon la revendication 2, **caractérisé en ce que** des mesures sont réalisées au moins toutes les secondes dans l'unité de mesure (11).

4. Procédé selon la revendication 3, **caractérisé en ce que** le gaz d'échappement avec dix à douze fois le volume d'air est mélangé à un courant de gaz mixte (10).

5. Procédé selon la revendication 4, **caractérisé en ce que** le flux de gaz d'échappement est maintenu à une température de 120 à 190° C.

6. Dispositif de réalisation du procédé selon l'une des revendications 1 à 5, dans lequel un premier dispositif de réglage de la pression (8) est prévu et en ce qu'un traitement du gaz d'échappement (6) est prévu avec une buse venturi (19) pour le mélange de gaz d'échappement (3) et d'air (7), dans lequel le flux de gaz d'échappement au raccord à dépression et l'air comprimé au raccord de pression de la buse venturi (19) sont adjacents, avec un étrangleur (18) dans le flux de gaz d'échappement avant la buse venturi (19) et avec un deuxième dispositif de réglage de la pression (21), qui limite la pression du gaz d'échappement avant l'étrangleur (18), dans lequel le premier dispositif de réglage de pression (8) maintient constante la pression de l'air (7) au raccord de pression de la buse venturi (19).

7. Dispositif selon la revendication 6, **caractérisé en ce qu'**un filtre (20) est monté en amont du deuxième dispositif de réglage de la pression (21).

8. Dispositif selon la revendication 7, **caractérisé en ce qu'**avant le traitement du gaz d'échappement (6) est prévu un chauffage (5) pour le flux de gaz d'échappement.

9. Dispositif selon la revendication 8, **caractérisé en ce qu'**une première (17) et une deuxième soupape d'arrêt (22) sont disposées parallèlement, dans lequel la premières soupape d'arrêt (17) constitue l'accès pour le gaz d'échappement et la deuxième soupape d'arrêt (21) constitue l'accès pour un gaz témoin (16) vers le traitement du gaz d'échappement (6).

10. Dispositif selon la revendication 9, **caractérisé en ce qu'**une pompe (12) est prévue, qui extrait un flux de gaz de mesure constant (13) du flux de gaz mixte (10) et l'achemine à travers l'unité de mesure (11).

11. Dispositif selon la revendication 10, **caractérisé en ce que** l'unité de mesure (11) présente un spectromètre photo-acoustique avec un laser à cascade quantique.

12. Dispositif selon la revendication 11, **caractérisé en ce que** des parties du dispositif, qui guident le gaz d'échappement, sont dotées d'un revêtement contre l'adsorption.
